Europäisches Patentamt

**European Patent Office**

Office européen des brevets

(19)

(11) Publication number: **0 029 328**
**A1**

(12) # EUROPEAN PATENT APPLICATION

(21) Application number: **80303991.6**

(51) Int. Cl.³: **H 02 K 5/22**, H 02 P 5/28

(22) Date of filing: **07.11.80**

(30) Priority: **14.11.79 GB 7939447**

(43) Date of publication of application: **27.05.81**
**Bulletin 81/21**

(84) Designated Contracting States: **AT BE CH DE FR GB IT
LI NL SE**

(71) Applicant: **SEALED MOTOR CONSTRUCTION
COMPANY LIMITED, Bristol Road, Bridgwater Somerset
TA 6 4AW (GB)**

(72) Inventor: **Addicott, Roy Wilfred, Rickstones 211a Berrow
Road, Burnham-on-Sea Somerset (GB)**

(74) Representative: **Armitage, Ian Michael et al, MEWBURN
ELLIS & CO. 70/72 Chancery Lane, London WC2A 1AD
(GB)**

(54) **Electric motor construction.**

(57) The terminations from the energising coils (12) of an electric motor stator (10) are directly connected to terminals (15–20) provided on a first component (14) attached to the stator. A second removable component (24) is provided with corresponding terminals (15A–20A) which mate with those of the first component so that the two components form a plug and socket unit. The terminals (15A–20A) of the second component are connected with other elements of the energising circuit such as power leads (28A, 29A) capacitor (35) and speed change switch (30, 52), thereby simplifying and rationalising the construction of the external part of the energising circuit.

0029328

## ELECTRIC MOTOR CONSTRUCTION

This invention relates to electric motors, and more particularly to the making of connections between the wire coils of the motor and the supply leads and any external circuit elements, without the use of conventional cables.

The usual procedure in making such connections is to solder lengths of electrical cable to the ends of the stator wires, and then connect those cables to terminals or other external components. This is, however, extremely time-consuming. The present invention seeks to provide a simpler method of making the connections, and of rationalising the design of electric motors in respect of the stator circuitry. UK Specification 1522863 discloses the use of a moulded plastics component mounted on the stator core and providing a number of electrical contacts to which the stator wires can be connected without the use of solder. The external leads are then individually connected to these contacts. This still leaves the external circuitry to be made up in the conventional manner, and so only partially improves over conventional practice.

The present invention provides an electric motor having an energised stator whose windings have a number of external terminations, a first component of a plug and socket unit being secured relative to the stator and being provided with a number of terminals to which the wires of the stator windings are directly connected, and a second removable component of the plug and socket unit having terminals which mate with those of the first component and to which electrical power leads and other elements of the energising circuit are or can be connected. The terminals of the first component are preferably adapted to receive, retain and establish electrical contact with the stator wire without the use of solder or other externally applied bonding medium, as for example in UK Specification 1522863, where each terminal comprises a conductive component having a slot into which the wire can be pressed and which narrows so as to grip the wire and break through any electrical insulation on the wire to establish electrical contact. Other elements of the energising circuit may comprise a switch incorporated in the second component for interconnecting stator coils in different ways via the mating terminals of the first and second components to provide different motor speeds. In the case of an induction motor, the other elements of the energising circuit may include a capacitor connected to terminals in the second component.

In order that the invention may be more clearly understood, one embodiment will now be described with reference to the accompanying drawings, wherein:

Fig. 1 shows a stator for an axial gap motor with a plug and socket assembly,

Fig. 2 shows a cross-sectional side view through the plug and socket components in use,

Fig. 3 shows a detailed cross-sectional view of two terminals in the plug assembly,

Fig. 4 shows an underside view of the plug,

Fig. 5 shows a diagrammatic plan view of the plug and socket unit as incorporated in the stator energising circuit, and

Fig. 6 shows an exploded perspective view of a socket terminal.

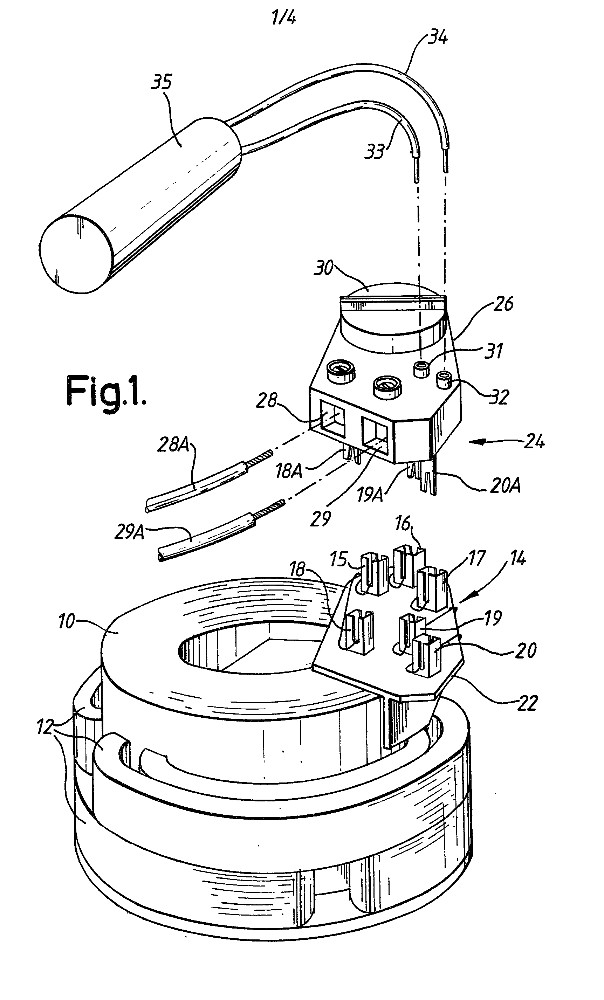

Referring to the drawings, and firstly to Fig. 1; the stator for the axial gap motor has an annular laminated core 10, with slots in one face, into which slots are placed the energising coils 12. A socket assembly 14 is securely mounted to the end of the stator core remote from the rotor (not shown). This socket can suitably be secured in that position by adhesive or by screws. The socket assembly has a number of terminal sockets 15,16,17,18,19,20, projecting upwardly from the moulded plastics body 22 of the socket assembly, and to which the wires of the stator coils are directly connected. A removable plug assembly 24 has a moulded plastics body 26 from the underside of which project metal terminal pins 15A,16A,17A,18A, 19A,20A, to connect with respective terminal sockets of the socket assembly. The plug assembly is provided with conventional line terminations 28,29 for connection with the power supply leads 28A,29A. It also incorporates a switch having a manually operable knob 30. Two terminals 31,32 are provided in the plug assembly to receive the wires 33,34 respectively from a capacitor 35.

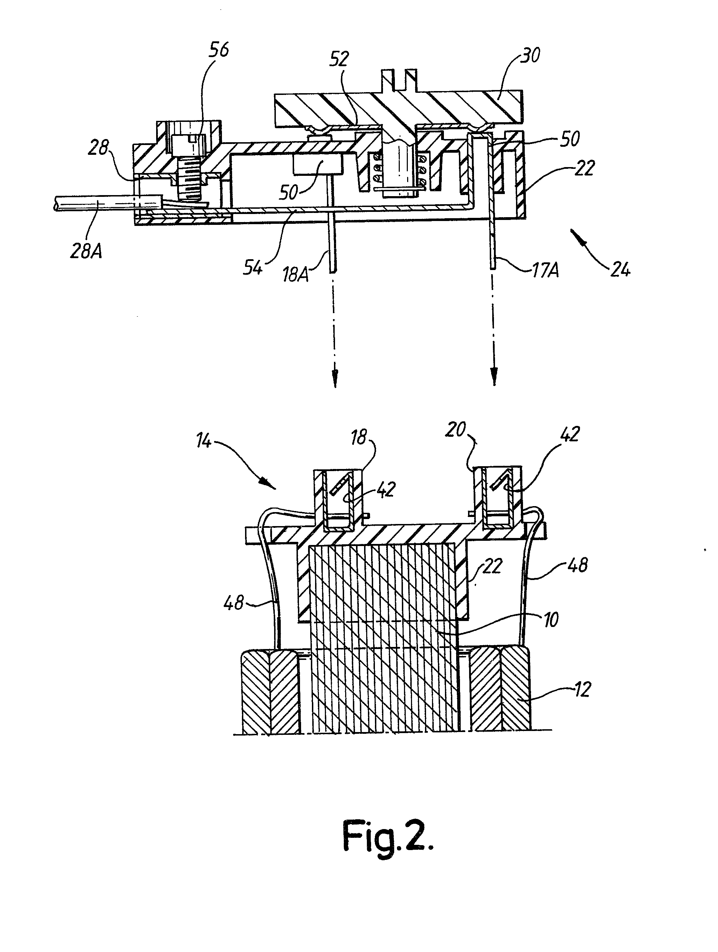

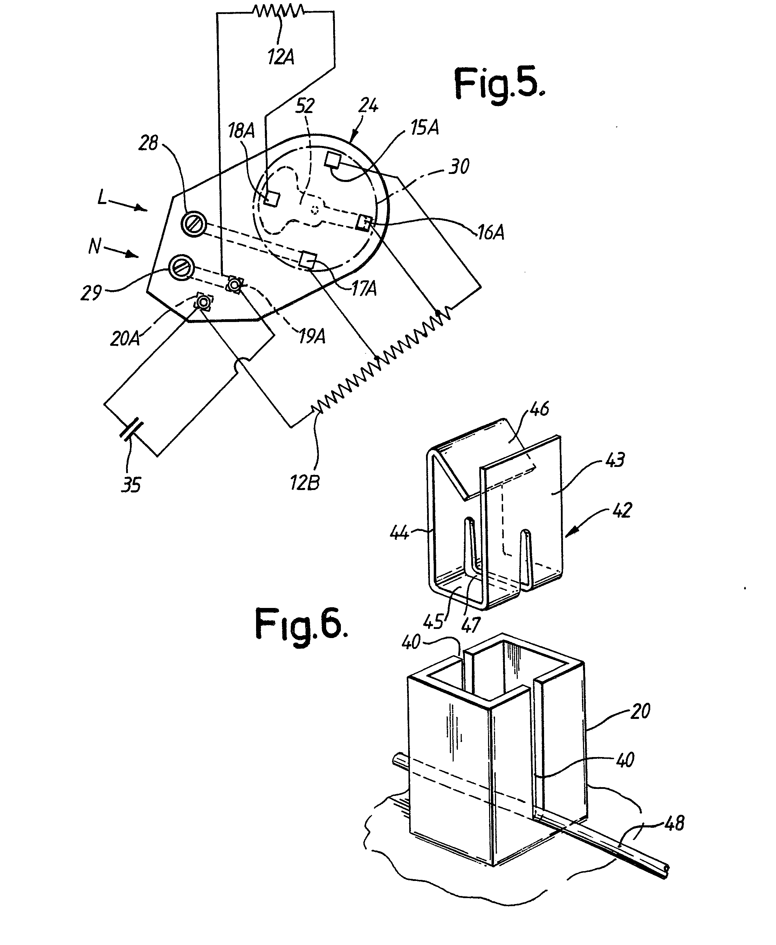

Referring also to Figs. 2 and 6, the sockets 15 to 20 are of plastics material and integrally moulded with the body 22. Each socket is of rectangular configuration in plan and has slots 40 in two opposite side walls, the slots extending downwardly from the upper edge of the socket. Within each socket is located a terminal 42 made of sheet copper or other metal. The terminal is of generally U shape, having two opposite side walls 43,44 joined by a base 45, the top edge of the side wall 44 being turned over as a flange 46 downwardly inclined towards the opposite side wall 43. A slot 47 extends across the base 45 and some distance up the side walls 43,44 and tapers upwardly in the side walls. A wire 48 from the stator is laid in the slots 40 of the socket 20, as shown in Fig. 6, and the terminal component 42 is then pressed fully down into the socket. In so doing, the wire which extends across the socket is received in the slot 47 and is pressed into the tapering upper portions of the slot in the side walls 43,44, so that the wire is gripped thereby and the insulation of the wire is broken, thereby establishing electrical contact with the terminal.

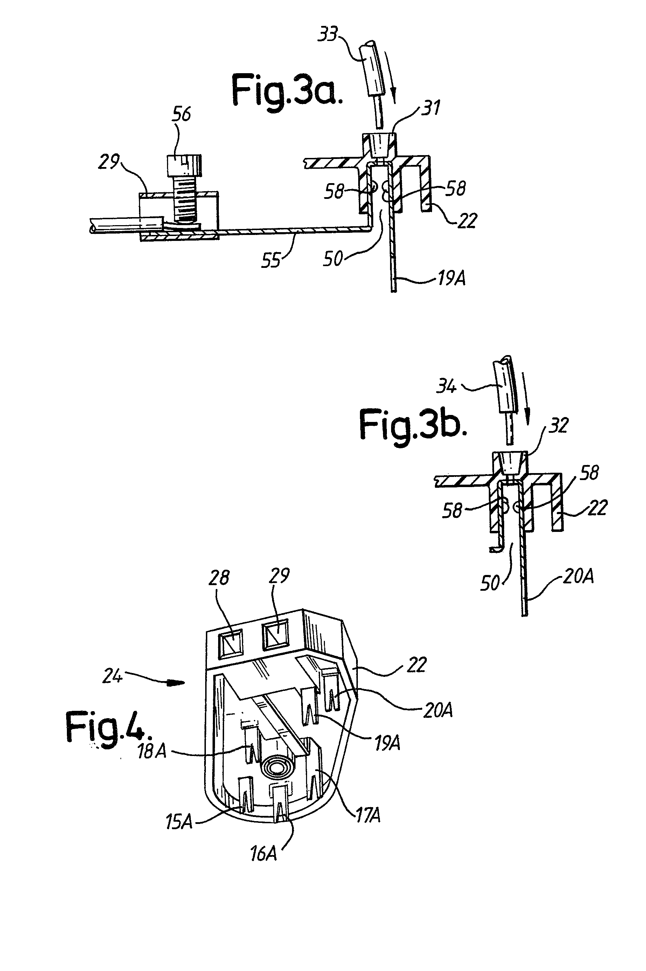

Referring now to Figs. 2 to 4; in the plug assembly, the terminal pins are similarly made from sheet metal, each comprises an inverted U-shaped portion which is a resilient push fit into a corresponding moulded opening in the underside of the plug body. In the case of the terminal pins 15A,16A,17A,18A, the top surfaces of the inverted U-shaped portions are exposed at the top surface of the plug body 22 to provide wiping contacts for a generally T-shaped metal plate 52 secured to the underside of the switch knob 30. The leg of the T-shaped plate makes contact selectively with the terminal pins 15A,16A,17A in alternative conditions of the knob 30, while the head of the plate makes contact with the terminal pin 18A in all three positions. Thus, the terminal pin 18A is connected selectively with any one of the terminal pins 15A,16A,17A. The sheet metal component of the terminal pin 17A is further extended at 54 along the underside of the plug body for connection with the line terminal 28. A screw 56 clamps the end of the power cable to the end of the metal strip 54. Figs. 3a and 3b show the terminal pins 19A,20A respectively. The metal terminal pin 19A is provided with an extension strip 55, similar to the strip 54, which connects with the terminal 29. The tops of the inverted U-shaped portions 50 of the terminal pins 19A,20A are exposed at terminal openings 31,32 in the top surface of the plug body, and are provided with registering openings, so that the ends of the cables 33,34 from the capacitor 35 can be pushed through from above into the inverted U-shaped portions 50 of the terminal pins. Inwardly deformed elements 58 in the U-shaped portions 50 receive and grip the cable ends to establish electrical contact therewith.

When the plug assembly is mated with the socket assembly, the pins 15A to 20A slide into terminals 42 of the sockets 15 to 20, and are gripped between the side wall 43 and turned over flange 46 of each socket terminal. The resulting stator circuitry is shown in Fig. 5. The stator coils comprise a main winding 12A connected between the terminals 18,19 and an auxiliary winding 12B connected primarily between the terminals 15 and 20, but with intermediate tappings to the terminals 16 and 17. Thus, rotation of the switch 30 provides different effective auxiliary windings, which provides different motor speeds.

Instead of manually operated switch, terminals similar to the terminals 31,32 could be provided in the plug body from other terminal pins, for connection with, for example, external automatic control equipment.

As can be seen, during the construction of the motor, the stator wires can be connected quickly, simply and directly to the terminals of the socket assembly without the use of solder or other bonding medium, and indeed the process of inserting the wires in the sockets and then inserting the socket terminals 42 can be completely automated. The plug assembly can be manufactured separately, and it is again a simple, inexpensive construction which can be easily replaced if it goes wrong, or if alternative external circuitry is desired. In the case of an axial gap motor, moreover, the entire auxiliary circuitry can be mounted to the plug assembly and fitted to the end of the stator housing instead of the more usual mounting of components to the side of the housing. This is particularly useful in the case of motors used in glandless circulating pumps, where side-mounted components often interfere with the installation of the pump, particularly the connection of the pipe unions.

CLAIMS:

1.      An electric motor having an energised stator (10) whose windings (12) have a number of external terminations (48) which are directly connected to terminals (15-20), carried by a component (14) secured relative to the stator, characterised in that said component (14) is the first component of a plug and socket unit, a second removable component (24) of which has terminals (15A-20A) which mate with those of the first component and to which electrical power leads (28A,29A) and other elements (30,52; 35) are or can be connected.

2.      An electric motor according to claim 1 wherein the second component (24) incorporates as one of said other elements a switch (30,52) for interconnecting stator coils (12A,12B) in different ways via the mating terminals (15-20; 15A-20A) of the first and second components to provide different motor speeds.

3.      An electric motor according to claim 2 wherein terminals (15A-18A) of the second component are metal elements which extend from one side of the second component, at which they are presented for mating with the corresponding terminals (15-18) of the first component, to another side of the second component at which they are exposed for wiping contact by a movable conductive component (52) of the switch.

4.      An electric motor according to any one of the preceding claims wherein the second component (24) has a capacitor (35) for the motor connected with the motor via terminals (19A,20A, 19,20) of the first and second components.

5. An electric motor according to claim 4 wherein terminals (19A,20A) of the second component are metal elements which extend from one side of the second component, at which they are presented for mating with the corresponding terminals (19,20) of the first component, to another side of the second component at which they are exposed (31,32) for connection to leads (33,34) from the capacitor.

6. An electric motor according to claim 5 wherein said capacitor terminals (19A,20A) of the second component are sheet metal elements formed with inverted U-shaped portions (50) the apexes of which are provided with openings exposed (31,32) at said other side of the second component to receive the capacitor leads, the U-shaped portions having inward projections (58) to grip the ends of the leads and establish electrical contact therewith.

0029328

Fig.1.

Fig.2.

0029328

3/4

33

Fig.3a.

56

29

58    58

22

55    50

19A

34

Fig.3b.

32

58    58

22

50    20A

28    29

24

22

Fig.4.

20A

18A    19A

15A    17A

16A

0029328

4/4

**Fig.5.**

**Fig.6.**

0029328

European Patent
Office

EUROPEAN SEARCH REPORT

Application number

EP 80 30 3991

## DOCUMENTS CONSIDERED TO BE RELEVANT

| Category | Citation of document with indication, where appropriate, of relevant passages | Relevant to claim |
|---|---|---|
| | EP - A - 0 004 423 (AMP INC.)<br>   * Page 5, line 16 - page 6, line 16 * | 1 |
| | DE - C - 642 627 (LOHR)<br>   * Page 3, lines 55-90; figure 7 * | 1-3 |
| | US - A - 3 264 542 (BURDETT)<br>   * Column 4, line 34 - column 6, line 46 * | 1 |
| | US - A - 3 417 214 (MOLEX)<br>   * Column 3, lines 40-68; column 4, lines 37-64 * | 1-3 |
| | GB - A - 1 111 257 (STACKPOLE CAR-BON)<br>   * Page 1, right-hand column, line 52 - page 2, right-hand column, line 86; page 3, left-hand column, lines 32-39 * | 1-3 |
| | US - A - 3 393 295 (SUNBEAM CORP.)<br>   * Column 6, line 39 - column 7, line 48; column 8, lines 30-37; column 15, line 53 - column 16, line 35 * | 1,2 |
| | US - A - 3 007 028 (NAT. PRESTO IND.)<br>   * Column 3, lines 18-54 * | 1,2 |

./.

The present search report has been drawn up for all claims

CLASSIFICATION OF THE
APPLICATION (Int. Cl.³)

H 02 K 5/22
H 02 P 5/28

TECHNICAL FIELDS
SEARCHED (Int. Cl.³)

H 02 K    5/22
H 01 R    4/24
          13/70
H 02 K   11/00
          17/30
          19/36
          23/66
          27/20
          27/28
H 05 B    1/02
H 02 P    5/28

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| The Hague | 27-01-1981 | TANGOCCI |

EPO Form 1503.1   06.78

**European Patent Office**

# EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US - A - 3 463 988 (CANADELLI)<br>* Column 2, lines 30-52 *<br><br>-- | 4,5 | |
| | US - A - 3 260 910 (SPINDLER)<br>* Column 4, lines 44-67 *<br><br>-- | 4 | |
| | US - A - 3 867 005 (HOPPE)<br>* Column 4, lines 27-35 *<br><br>-- | 6 | TECHNICAL FIELDS SEARCHED (Int. Cl. 3) |
| P | US - A - 4 208 083 (KIRBY)<br>* Column 3, line 61 - column 8, line 3 *<br><br>-- | 6 | |
| A | US - A - 4 130 331 (NEFF et al.)<br>* Column 7, lines 24-57 *<br><br>-- | | |
| A | US - A - 2 922 054 (MILLER)<br>* Column 1, lines 41-57; column 2, lines 7-65 *<br><br>-- | | |
| A | US - A - 3 139 492 (CAGE)<br>* Column 2, lines 48-69; column 3, lines 37-51 *<br><br>-- | | |
| A | DE - A - 2 001 834 (BOSCH) | | |
| A | FR - A - 2 200 661 (GRUNDFOS)<br><br>---- | | |

EPO Form 1503.2 06.78